# EUROPÄISCHE PATENTSCHRIFT

(11) **EP 1 995 116 B1**
(45) Veröffentlichungstag und Bekanntmachung des Hinweises auf die Patenterteilung: **29.02.2012**
(21) Anmeldenummer: 08102998.5
(22) Anmeldetag: 27.03.2008
(51) Int. Cl.: B60R 1/00, B60K 35/00, B60W 50/08, G02B 27/01, G06K 9/00, G08G 1/16, H04N 5/272

(54) **Darstellungsverfahren zur Unterstützung eines Fahrzeugführers**
Display device for assisting the driver of an automobile
Procédé de représentation destiné à assister un conducteur de véhicule

(30) Priorität: 23.05.2007 DE 102007024395
(43) Veröffentlichungstag der Anmeldung: 26.11.2008
(73) Patentinhaber: ROBERT BOSCH GMBH, 70442 Stuttgart (DE)
(72) Erfinder: Yang, Yiwen, 31141 Hildesheim (DE); Bersiner, Lutz, 31139 Hildesheim (DE); Engelsberg, Andreas, 31134 Hildesheim (DE)

(56) Entgegenhaltungen:
- EP-A- 1 967 821
- DE-A1- 10 245 334
- DE-A1- 10 257 484

## Beschreibung

### Stand der Technik

Die Erfindung betrifft ein Darstellungsverfahren zur Unterstützung eines Fahrzeugführers mittels eines Head-Up-Displays.

Bekannt ist die Darstellung von Informationen im Armaturenbrett, beispielsweise durch Anzeigeinstrumente und Leuchtsymbole sowie in Form akustischer und haptischer Signale. Ebenso bekannt ist die Darstellung von Informationen durch ein sogenanntes Head-Up-Display (HUD), bei dem die Informationen als virtuelles Bild durch eine Spiegelung in der Windschutzscheibe im Blickfeld des Fahrzeugführers dargestellt werden. Mittels eines Head-Up-Displays können statische Informationen und kontaktanaloge Informationen dargestellt werden. Statische Informationen sind solche, die sich im Blickfeld des Fahrzeugführers immer an derselben Stelle befinden. Beispiele hierfür sind die Fahrzeuggeschwindigkeit und die Motordrehzahl. Kontaktanaloge Informationen sind Anzeigeelemente, die dem Fahrzeugführer in sein aktuelles Blickfeld so eingeblendet werden, als seien sie fester Bestandteil der von ihm wahrgenommenen Umgebung. Dadurch erscheint beispielsweise ein Navigationspfeil so, als läge er direkt auf der Straße.

In den Schriften DE 10 2005 020 772 A1, DE 10 2005 010 843 A1 und DE 10 2005 037 288 A1 wird eine solche kontaktanaloge Anzeige eines Head-Up-Displays (HUD), bei dem die dargestellte Information ständig mit der Umgebung synchronisiert wird, ebenfalls beschrieben.

Ebenso bekannt ist ein Überholhilfemodul, welches Daten aus verschiedenen im Fahrzeug zur Verfügung stehenden Quellen sammelt und auswertet, um so für den Fahrzeugführer einen möglichst günstigen Überholweg abzuschätzen. Die Daten über eine dem Fahrzeug bevorstehende Fahrstrecke werden aus der Positionsbestimmung, Spurverlasswarneinrichtung, dem Navigationssystem und anderen Quellen, die Hinweise über die Eignung der Fahrstrecke zum Überholen geben, gesammelt. Für die Abschätzung der Eignung der Fahrstrecke können bekannte Systeme wie die Videobildauswertung, die Radarortung, Temperatur- und Regenfühler sowie Verkehrsinformationssysteme und viele andere eingesetzt werden. Dem Fahrzeugführer wird, wie in der DE 103 10 501 A1 beschrieben, mittels des Sprachausgabesystems des Navigationsystems ein sprachlicher Hinweis zur Überholmöglichkeit gegeben.

Aus der DE 102 55 331 A1 ist ein Fahrerinformationssystem zur Information des Fahrzeugführers über Eigenschaften von Streckenabschnitten einer Fahrstrecke, die von einem Fahrzeugstandort aus vor dem Fahrzeug liegen, bekannt. Das Fahrerinformationssystem ermöglicht die Unterrichtung des Fahrzeugführers über auf seiner Strecke liegende Überholmöglichkeiten und damit eine vorausschauende und entspannte Fahrweise, die zur allgemeinen Verkehrssicherheit beiträgt. Das beschriebene Fahrerinformationssystem gibt an den Fahrzeugführer Informationen über die Eigenschaften der Streckenabschnitte, eventuelle Überholverbote und/oder die Anzahl von Fahrspuren, insbesondere die Anzahl von Fahrspuren für die eigene Fahrtrichtung, und/oder die Breite von Fahrspuren und/oder die ungehinderte Sichtweite und/oder Kreuzungen und/oder die Länge aus. Die Ausgabe erfolgt dabei in Form von Symbolen, die aus der StVO bekannt sind, oder die ähnlich diesen Symbolen gestaltet sind.

Die Druckschrift DE 103 10 501 A1 zeigt eine Vorrichtung mit einem Überholhilfemodul zur Fahrerunterstützung in Kraftfahrzeugen. Diese Vorrichtung beschreibt ein Überholhilfemodul, das einem Informationssystem Informationen über das Verkehrsumfeld bereitstellt.

In der DE 10 2004 027 695 A1 wird eine Streckenvorausschau für Überholvorgänge beschrieben. Diese Streckenvorausschau ist eine Vorrichtung zum Zusammentragen von Informationen über den möglichen Überholweg. Dabei wird auf bekannte Navigationssysteme und spezielle Daten digitaler Karten zurückgegriffen. Auch wird die aktuelle Witterungslage in die Bewertung einer vorausliegenden potentiellen Überholstrecke einbezogen. Als Ergebnis werden vorausliegende potentielle Überholstrecken nach ihrer Eignung klassifiziert und dem Fahrer zum Beispiel per Display mitgeteilt.

Bekannt aus der DE 10 2004 019 337 A1 ist ein Assistenzsystem für Kraftfahrzeuge, insbesondere ein elektronischer Rallye-Copilot, als Überholassistent oder Rechts-vor-Links-Assistent. Der Überholassistent teilt dem Fahrer nach einer Warnung und/oder einem Signal mit, in welcher Entfernung der nächste geeignete Streckenabschnitt für ein Überholmanöver zu erwarten ist. Der Überholassistent erkennt das zu überholende Fahrzeug, möglichen Gegenverkehr und andere Hindernisse wie Tiere oder Fußgänger, die den Überholvorgang gefährden könnten, und generiert eine Warnung, wenn der Überholvorgang kritisch wird.

Die DE 10 2005 004 511 A1 zeigt ein Verfahren zur Spurverlasswarnung bei Überholvorgängen.

Die bekannten Überholhilfen geben die Informationen über die Eigenschaften des Überholwegs nur statisch, zum Beispiel in Form von unveränderlichen Symbolen, an den Fahrzeugführer weiter. Dabei erhöhen die Informationen das Sicherheitsniveau und dem Fahrzeugführer wird bei der Entscheidungsfindung geholfen, jedoch ist immer das "Lesen" der dargebotenen Information durch den Fahrer erforderlich, d.h. der Fahrer muss die Information immer interpretieren.

Aus der DE 102 45 334 A1 ist eine Navigationsvorrichtung zur Führung eines Fahrzeugs in einem Verkehrswegenetz mit den Merkmalen des Oberbegriffs des Anspruchs 1 bekannt, wobei zur Führung ein Leitobjekt gegenüber dem Verkehrsweg derart dargestellt wird, dass das Leitobjekt von dem Fahrzeug vorzunehmende Fahrmanöver ausführt. Das Leitobjekt kann den Fahrer, falls keine Einwände gegen einen Überholvorgang auf Basis der Navigationsdaten bestehen, eine Möglichkeit des Überholvorgangs unter Berücksichtigung von langreichweitigen Sensoren ebenfalls anzeigen.

Aus der nachveröffentlichten EP 1 967 821 A1 ist ein Assistenzsystem für den Fahrer eines Fahrzeugs im öffentlichen Straßenverkehr bekannt. Hierbei wird dem Fahrer ein Lotsenfahrzeugsymbol darstellt, für dessen Darstellung eine Umfelderfassung berücksichtigt wird.

Aus der DE 102 57 484 A1 ist ein Verfahren zur Darstellung der Umgebung eines Fahrzeugs bekannt, bei dem eine Kameraeinrichtung Objekte der Umgebung des Fahrzeugs erfasst und visuelle Informationen in einem virtuellen Umgebungsbild bereitstellt, um die von der Kameraeinrichtung erfassten Objekte perspektivisch korrekt darzustellen.

Die Erfindung betrifft eine Möglichkeit, den Fahrzeugführer bei der Einleitung und/oder Durchführung des Überholvorgangs zu unterstützen und dabei eine geringere Ablenkung des Fahrzeugführers durch intuitive Verständlichkeit der dargebotenen Information zu erreichen.

### Offenbarung der Erfindung

### Vorteile der Erfindung

Die Erfindung betrifft ein Darstellungsverfahren zur Unterstützung eines Fahrzeugführers mittels eines Head-Up-Displays, dadurch gekennzeichnet, dass durch eine synchrone Überlagerung der für den Fahrzeugführer sichtbaren Darstellung der natürlichen Umgebung mit künstlich erzeugten Objekten mittels des Darstellungsverfahrens die Darstellung benachbarter Fahrspuren für den Fahrzeugführer abhängig von für den Überholvorgang relevanten Informationen verändert wird und den Vorteil hat, dass der Fahrzeugführer bei der Einleitung und/oder der Durchführung des Überholvorgangs keine abstrakten Symbole interpretieren muss. Das Darstellungsverfahren ermöglicht so die schnelle und intuitive Erfassung von Informationen und dient somit der Erhöhung der Verkehrssicherheit und der Entlastung des Fahrzeugführers.

Durch die in den abhängigen Ansprüchen aufgeführten Maßnahmen sind vorteilhafte Weiterbildungen und Verbesserungen der im unabhängigen Anspruch angegebenen Erfindung möglich.

Besonders vorteilhaft ist, dass mittels des Darstellungsverfahrens die Fahrstrecke für den Fahrzeugführer eingefärbt darstellt wird. Hierdurch ist es möglich, den Fahrzeugführer über die Möglichkeit der Benutzung der Fahrstrecke zu unterrichten, ohne dass der Fahrzeugführer seinen Blick von der Umgebung und dem Verkehrsfluss abwenden muss. Hierbei ist die Nutzung verschiedener Farben - ähnlich deren Bedeutung im Straßenverkehr - möglich. So könnte die Fahrstrecke rot eingefärbt werden, wenn ein Überholvorgang nicht möglich ist.

Vorteilhaft ist auch, dass mittels des Darstellungsverfahrens die Fahrstrecke für den Fahrzeugführer mit einem Muster versehen dargestellt wird. Hierdurch ist es möglich, dass der Hinweis für den Fahrer auch mittels eines einfarbig arbeitenden Head-Up-Displays darstellbar ist. Beispielsweise könnte die Fahrstrecke mit einer Schraffur überdeckt werden, wenn ein Überholvorgang nicht möglich ist.

Weiterhin ist es vorteilhaft, dass die Darstellung durch Änderung der Helligkeit, des Kontrastes, der Transparenz und/oder der Farbgebung variabel eingestellt wird. Hierdurch ist es möglich, dass die Darstellung an die Helligkeit der Umgebung oder an die Sehstärke der Brille des Fahrzeugführers angepasst wird.

Vorteilhaft ist, dass bei einer für den Überholvorgang ungünstigen Situation die Darstellung der natürlichen Markierung der Fahrbahn durch eine Überlagerung mit einer künstlich erzeugten Darstellung einer Fahrbahnmarkierung verändert wird. Hierdurch ist es möglich, dass der Fahrzeugführer, wenn ein Überholvorgang nicht möglich ist, zum Beispiel die Darstellung einer durchgezogenen Mittellinie sieht.

Vorteilhaft ist, dass bei einer für den Überholvorgang ungünstigen Situation die Darstellung der Fahrstrecke für den Fahrzeugführer verändert wird. Hierdurch ist es möglich, den Fahrzeugführer auf das Unterlassen eines Überholvorgangs hinzuweisen, beispielsweise durch eine Rotfärbung der Fahrstrecke.

Vorteilhaft ist, dass bei einer für den Überholvorgang günstigen Situation die Darstellung der Fahrstrecke für den Fahrzeugführer verändert wird. Hierdurch ist es möglich, dass auf eine Gelegenheit für einen Überholvorgang hingewiesen wird, beispielsweise durch eine Grünfärbung der Fahrstrecke.

Weiterhin ist es vorteilhaft, dass gemeinsam mit der Änderung der Darstellung einzelne, für den Überholvorgang relevante Informationen explizit dargestellt werden. Hierdurch ist es möglich, dass die Länge eines Überholverbots oder die verbleibende Länge des Überholwegs angezeigt wird. Auch können zusätzlich eingeblendete Symbole, wie Tempolimit oder Überholverbot, den Fahrzeugführer informieren, sodass dieser sein Fahrmanöver oder den Überholvorgang besser einschätzen und sicherer abschließen kann.

Ebenso vorteilhaft ist es, dass mittels Sensoren die Augenposition und/oder der Blickwinkel des Fahrzeugführers erfasst werden, um so eine synchrone Überlagerung zu erreichen. Hierdurch ist es möglich, dass die künstlich erzeugte Darstellung von dem Fahrzeugführer unabhängig von dessen Kopf und Augenbewegungen als Bestandteil der Darstellung der natürlichen Umgebung erfasst wird.

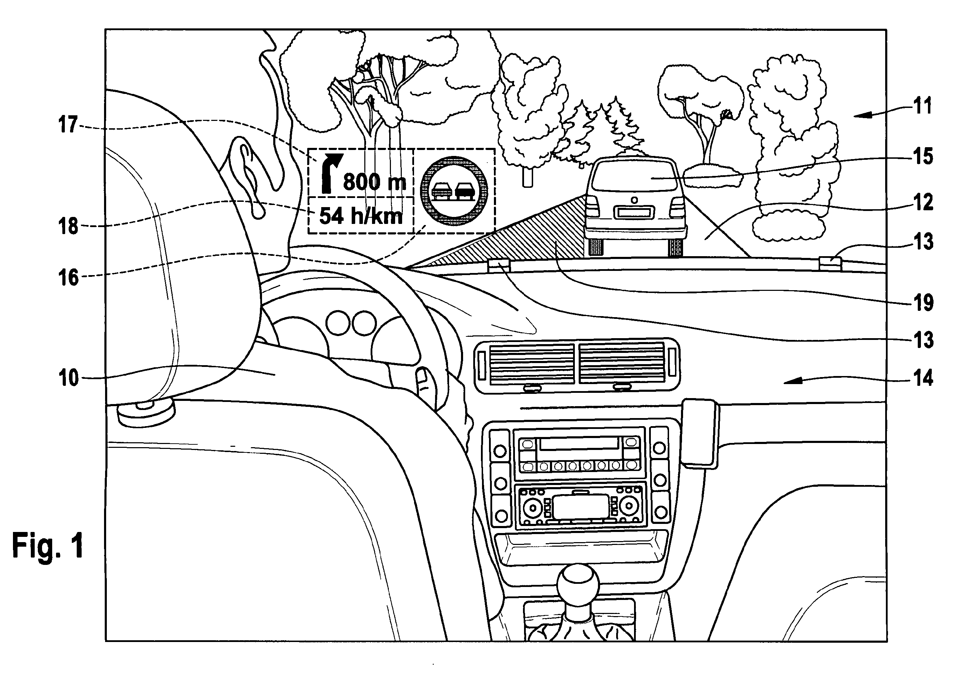

### Kurze Beschreibung der Zeichnung

Ein Ausführungsbeispiel der Erfindung ist in der Zeichnung dargestellt und in der nachfolgenden Beschreibung näher erläutert.

Die Zeichnung zeigt eine skizzierte Ansicht der für einen Fahrzeugführer veränderten Darstellung der natürlichen Umgebung zur Unterstützung bei einem Überholvorgang.

### Ausführungsformen der Erfindung

In der Zeichnung ist eine für einen Fahrzeugführer 10 veränderte Darstellung der natürlichen Umgebung 11 skizziert. Der Fahrzeugführer 10 bewegt sich mit seinem Fahrzeug 14 dabei auf einer Fahrstrecke 12 hinter einem Automobil 15. Der Fahrzeugführer 10 möchte das Automobil 15 überholen. Aus der für den Fahrzeugführer 10 erkennbaren natürlichen Umgebung 11 kann der Fahrzeugführer 10 nicht die Informationen erkennen, die für eine Abschätzung der Eignung einer vorausliegenden Fahrstrecke 12 notwendig sind. Insbesondere eine Abschätzung, auf welcher Länge die Fahrstrecke 12 frei von Hindernissen, entgegenkommenden Fahrzeugen, engen Kurven, Abzweigungen oder Überholverboten ist, ist nicht möglich. Mittels des Überholhilfemoduls werden Informationen über die Fahrstrecke 12 aus unterschiedlichen Quellen aufbereitet. Das Überholhilfemodul berechnet einen notwendigen Überholweg. Dieser notwendige Überholweg wird dann von dem Überholhilfemodul mit den aus den Eigenschaften der Fahrstrecke 12 ermittelten Daten verglichen. Je nach Eignung der Fahrstrecke 12 für einen Überholvorgang werden statische Informationen in Form von Symbolen 16, 17, 18 eingeblendet und/oder die Darstellung der natürlichen Erscheinung der bevorstehenden Fahrstrecke 12 verändert. In der Figur ist eine Situation gezeigt, in der dem Fahrzeugführer 10 von einem Überholvorgang wegen eines Überholverbotes, welches in einer Entfernung von 800 Metern beginnt, abgeraten wird. Dazu ist die Fahrstrecke 12 mittels eines Head-Up-Displays für den Fahrzeugführer 10 mit einer Schraffur 19 versehen oder rot eingefärbt darstellt. Des Weiteren sind mittels des Head-Up-Displays Symbole 16, 17, 18 im Sichtfeld des Fahrzeugführers 10 eingeblendet. Diese Symbole 16, 17, 18 zeigen ein Überholverbot 16, welches in einer Entfernung 17 von 800m beginnt. Dem Fahrzeugführer 10 wird außerdem die aktuelle Fahrgeschwindigkeit 18 des Fahrzeugs 14 dargestellt. Mittels Sensoren 13 werden in einer Ausgestaltung die Augenposition und/oder der Blickwinkel des Fahrzeugführers 10 kontinuierlich erfasst. So ist eine für den Fahrzeugführer 10 synchrone Überlagerung der künstlichen Darstellung mit der Darstellung der natürlichen Umgebung 11 derart erreichbar, dass sich aus Sicht des Fahrzeugführers die künstliche und die natürliche Darstellung überlagern.

## Patentansprüche

1. Darstellungsverfahren zur Unterstützung eines Fahrzeugführers (10) mittels eines Head-Up-Displays, **dadurch gekennzeichnet, dass** durch eine synchrone Überlagerung der für den Fahrzeugführer (10) sichtbaren Darstellung der natürlichen Umgebung (11) mit künstlich erzeugten Objekten mittels des Darstellungsverfahrens die Darstellung benachbarter Fahrspuren (12) für den Fahrzeugführer (10), abhängig von für den Überholvorgang relevanten Informationen verändert wird.

2. Darstellungsverfahren nach Anspruch 1, **dadurch gekennzeichnet, dass** die Darstellung durch Änderung der Helligkeit, des Kontrastes, der Transparenz und/oder der Farbgebung variabel eingestellt wird.

3. Darstellungsverfahren nach mindestens einem der vorhergehenden Ansprüche, **dadurch gekennzeichnet, dass** bei einer für den Überholvorgang ungünstigen Situation die Darstellung der natürlichen Markierung der Fahrbahn durch eine Überlagerung mit einer künstlich erzeugten Darstellung einer Fahrbahnmarkierung verändert wird.

4. Darstellungsverfahren nach mindestens einem der vorhergehenden Ansprüche, **dadurch gekennzeichnet, dass** bei einer für den Überholvorgang ungünstigen Situation die Darstellung der Fahrstrecke (12) für den Fahrzeugführer (10) verändert wird.

5. Darstellungsverfahren nach mindestens einem der vorhergehenden Ansprüche, **dadurch gekennzeichnet, dass** bei einer für den Überholvorgang günstigen Situation die Darstellung der Fahrstrecke (12) für den Fahrzeugführer (10) verändert wird.

6. Darstellungsverfahren nach mindestens einem der vorhergehenden Ansprüche, **dadurch gekennzeichnet, dass** gemeinsam mit der Änderung der Darstellung einzelne, für den Überholvorgang relevante Informationen explizit dargestellt werden.

7. Darstellungsverfahren nach mindestens einem der vorhergehenden Ansprüche, **dadurch gekennzeichnet, dass** mittels Sensoren (13) die Augenposition und/oder der Blickwinkel des Fahrzeugführers (10) erfasst wird, um so die synchrone Überlagerung zu erreichen.

## Claims

1. Display method for assisting a driver (10) of a vehicle by means of a headup display, **characterized in that** by synchronously superimposing artificially generated objects on the display of the natural surroundings (11) which can be seen by the driver (10) of the vehicle, by means of the display method, the representation of adjacent lanes (12) to the driver (10) of the vehicle is changed as a function of the information which is relevant for the overtaking process.

2. Display method according to Claim 1, **characterized in that** the display is set in a variable fashion by changing the brightness, the contrast, the transparency and/or the colours.

3. Display method according to at least one of the preceding claims, **characterized in that** in a situation which is unfavourable for the overtaking process, the display of the natural marking of the carriageway is changed by superimposing an artificially generated display of a carriageway marking.

4. Display method according to at least one of the preceding claims, **characterized in that** in a situation which is unfavourable for the overtaking process, the display of the route (12) to the driver (10) of the vehicle is changed.

5. Display method according to at least one of the preceding claims, **characterized in that** in a situation which is favourable for the overtaking process, the display of the route (12) for the driver (10) of the vehicle is changed.

6. Display method according to at least one of the preceding claims, **characterized in that** individual information items which are relevant for the overtaking process are displayed explicitly together with the change in the display.

7. Display method according to at least one of the preceding claims, **characterized in that** the position of the eyes and/or the viewing angle of the driver (10) of the vehicle are/is detected by means of sensors (13) in order to bring about the synchronous superimposition.

## Revendications

1. Procédé de représentation pour assister un conducteur de véhicule (10) au moyen d'un afficheur tête haute, **caractérisé en ce que** la représentation des bandes de circulation (12) voisines est modifiée pour le conducteur de véhicule (10) par une superposition synchrone à la représentation visible de l'environnement naturel (11) par le conducteur du véhicule (10) d'objets produits artificiellement au moyen du procédé de représentation en fonction d'informations pertinentes pour la manoeuvre de dépassement.

2. Procédé de représentation selon la revendication 1, **caractérisé en ce que** la représentation est réglée de manière variable en fonction de la luminosité, du contraste, de la transparence et/ou de la coloration.

3. Procédé de représentation selon au moins l'une des revendications précédentes, **caractérisé en ce que** dans le cas d'une situation défavorable à une manoeuvre de dépassement, la représentation du marquage naturel de la voie de circulation est modifiée par une superposition d'une représentation produite artificiellement d'un marquage de la voie de circulation.

4. Procédé de représentation selon au moins l'une des revendications précédentes, **caractérisé en ce que** dans le cas d'une situation défavorable à une manoeuvre de dépassement, la représentation de la bande de circulation (12) pour le conducteur du véhicule (10) est modifiée.

5. Procédé de représentation selon au moins l'une des revendications précédentes, **caractérisé en ce que** dans le cas d'une situation favorable à une manoeuvre de dépassement, la représentation de la bande de circulation (12) pour le conducteur du véhicule (10) est modifiée.

6. Procédé de représentation selon au moins l'une des revendications précédentes, **caractérisé en ce que** des informations individuelles pertinentes pour la manoeuvre de dépassement sont représentées explicitement conjointement avec la modification de la représentation.

7. Procédé de représentation selon au moins l'une des revendications précédentes, **caractérisé en ce que** la position des yeux et/ou l'angle d'observation du conducteur du véhicule (10) sont détectés au moyen de capteurs (13) afin d'obtenir ainsi la superposition synchrone.
